# EUROPÄISCHE PATENTSCHRIFT

(11) **EP 2 805 810 B1**
(45) Veröffentlichungstag und Bekanntmachung des Hinweises auf die Patenterteilung: **16.03.2016**
(21) Anmeldenummer: 14167304.6
(22) Anmeldetag: 07.05.2014
(51) Int. Cl.: B31F 1/28

(54) **Anlage zur Herstellung einer einseitig kaschierten Wellpappebahn**
Arrangement for producing a corrugated board web laminated on one side
Installation de fabrication d'une bande de carton ondulé contrecollé sur une face

(30) Priorität: 23.05.2013 DE 102013209603
(43) Veröffentlichungstag der Anmeldung: 26.11.2014
(73) Patentinhaber: BHS Corrugated Maschinen-und Anlagenbau GmbH, 92729 Weiherhammer (DE)
(72) Erfinder: Fischer, Markus, 92708 Mantel (DE); Schieder, Sebastian, 92637 Letzau (DE)
(74) Vertreter: Rau, Schneck & Hübner Patentanwälte Rechtsanwälte PartGmbB

(56) Entgegenhaltungen:
- EP-A2- 0 698 752
- WO-A1-99/08866

## Beschreibung

Die Erfindung betrifft eine Anordnung zur Herstellung einer einseitig kaschierten Wellpappebahn gemäß dem Oberbegriff des Anspruchs 1. Eine einseitig kaschierte Wellpappebahn umfasst eine eine Wellung aufweisende Wellbahn und eine mit dieser verbundene Deckbahn.

Der Stand der Technik offenbart derartige gattungsgemäße Anordnungen. Aus dem Stand der Technik sind beispielsweise Anordnungen bekannt, die eine verfahrbare Spannwalze, eine Heizwalze und eine zwischen diesen angeordnete, verkippbare Regelwalze umfassen. Um die Walzen ist ein Anpressband geführt, das im Allgemeinen aus einem Metallgewebe gebildet ist. Durch Verkippen der Regelwalze ist der Verlauf des Anpressbands beeinflussbar, während sich ein Verfahren der Spannwalze auf die Spannung des Anpressbands auswirkt. Die Anpressbänder sind einem hohen Verschleiß ausgesetzt, was deren Lebensdauer stark reduziert. Für das Verstellen der Walzen sind hohe Kräfte erforderlich. Diese Anordnungen haben einen sehr großen Platzbedarf. Ferner sind sie in der Anschaffung äußerst kostenintensiv.

Aus der EP 0 698 752 A2 sind verschiedene Kaschier-Maschinen bekannt. Bei einer Ausführungsform ist ein endloses Andrück-Band um Walzen geführt, die in Stegen gelagert sind. An einem der Stege greift ein Winkel-Verstellzylinder an, sodass die Laufrichtung des Andrück-Bands um einen Ablenkungs-Winkel veränderbar ist. Eine Steuereinheit steuert auf Basis von einem Detektor erhaltener Signale den Winkel-Verstellzylinder. Bei einer anderen Ausführungsform sind außerdem Bandspann-Einstellzylinder vorgesehen, die auf Basis eines ermittelten Spannungswertes des Andrück-Bands betätigt werden und dessen Spannung einstellen. Der Winkel-Verstellzylinder und die Bandspann-Einstellzylinder greifen an den Stegen an.

Die WO 99/08866 A1 offenbart eine Anordnung zur Herstellung einer einseitig kaschierten, endlosen Wellpappebahn. Die Anordnung umfasst ein Paar Riffelwalzen und eine Leimauftragseinrichtung sowie ein Anpressband-Modul. Das Anpressband-Modul wiederum hat eine Bandspannwalze, die von Spannarmen gehalten ist. Jeder Spannarm ist verschwenkbar gelagert. Durch Verschwenkung der Spannarme ist die Spannung des Bands des Anpressband-Moduls veränderbar. Das Anpressband-Modul umfasst außerdem eine Steuerwalze, die an einem Steuerarm und einem Pendelkugellager gelagert ist. Der Steuerarm ist betätigbar, was zu einer Änderung der angularen Position der Steuerwalze in Bezug auf das Band führt. Eine Abweichung des Bands in der Breitenrichtung kann durch einen Detektor erfasst werden. Die Steuerwalze ist entsprechend auslenkbar.

Der Erfindung liegt die Aufgabe zugrunde, eine Anordnung zur Herstellung einer einseitig kaschierten Wellpappebahn zu schaffen, die die oben angegebenen Nachteile überwindet. Insbesondere soll eine Anordnung bereitgestellt werden, bei der das Anpressband im Betrieb über seine Breite im Wesentlichen eine identische Umschlingungslänge bzw. Lauflänge hat. Ferner sollen die Regelkräfte zum Regeln des Verlaufs des Anpressbands und die Spannkräfte äußerst niedrig sein.

Diese Aufgabe wird erfindungsgemäß durch die in dem unabhängigen Anspruch 1 angegebenen Merkmale gelöst. Der Kern der Erfindung liegt darin, dass durch die Bandspann- und Bandlaufregelwalze das Anpressband sowohl in seinem Verlauf in Laufrichtung regelbar als auch in seiner Spannung veränderbar ist. Die Bandspann- und Bandlaufregelwalze übernimmt somit die Funktion einer Bandspannwalze und einer Bandlaufregelwalze. Zum Verändern der Spannung des Anpressbands ist eine Bandspann-Verstelleinrichtung vorgesehen, während zum Regeln des Verlaufs des Anpressbands eine Bandlaufregel-Verstelleinrichtung vorhanden ist.

Die gleichmäßige Veränderung des Abstands der Bandspann- und Bandlaufregelwalze zu der Umlenkwalze zum reinen Bandspannen erfolgt vorzugsweise linear und/oder bogenförmig, bevorzugter kreisbogenförmig. Unter dem Ausdruck "gleichmäßiges Verändern" wird vorzugsweise eine derartige Veränderung verstanden, dass die Bandspann- und Bandlaufregelwalzen-Längsmittelachse vor und nach dem Verändern des Abstands eine identische Ausrichtung zu der Umlenkwalzen-Längsmittelachse hat. Der Abstand ist vergrößerbar oder reduzierbar. Beim Vergrößern des Abstands erfolgt eine Erhöhung der Spannung des Anpressbands, während bei einer Reduzierung des Abstands eine Reduzierung der Spannung des Anpressbands erfolgt.

Die Verkipp-Bewegung der Bandspann- und Bandlaufregelwalze gegenüber der Umlenkwalze erfolgt vorzugsweise linear und/oder bogenförmig, bevorzugter kreisbogenförmig. Beim Verkippen ändert sich der Winkel der Bandspann- und Bandlaufregelwalze zu der Umlenkwalze.

Die Bandspann-Verstelleinrichtung und die Bandlaufregel-Verstelleinrichtung sind getrennt oder gemeinsam betätigbar, was dann zu einem separaten reinen Spannen des Anpressbands und reinen Regeln des Verlaufs des Anpressbands bzw. zu einem kombinierten Spannen des Anpressbands und Regeln des Verlaufs des Anpressbands führt.

Die Erfassungseinrichtung ist vorzugsweise als Sensoreinrichtung ausgeführt.

Es ist von Vorteil, wenn die Regeleinrichtung eine elektrische bzw. elektronische Regeleinrichtung ist.

Die Stellvorrichtung umfasst mindestens ein Bandspann-Stellmittel und mindestens einen Bandlaufregel-Stellaktuator. Günstigerweise ist das Bandspann-Stellmittel in seiner Länge veränderbar. Vorzugsweise ist der Bandlaufregel-Stellaktuator ein Bandlaufregel-Schwenk-Stellaktuator.

Die Stellvorrichtung steht mit der Bandspann- und Bandlaufregelwalzen-Verstellvorrichtung in Verbindung.

Die Signalverbindungen sind drahtlos oder drahtgebunden ausgeführt.

Es ist von Vorteil, wenn die Umlenkwalze und/oder die Bandspann- und Bandlaufregelwalze beheizbar bzw. im Betrieb beheizt ist/sind.

Weitere vorteilhafte Ausgestaltungen der Erfindung sind in den Unteransprüchen angegeben.

Die Erfassungseinrichtung nach Unteranspruch 2 misst beispielsweise direkt die Lauflängen des Anpressbands in Umfangsrichtung. Alternativ ermittelt sie Informationen zur Berechnung der Lauflängen des Anpressbands in Umfangsrichtung. Durch die dann bekannten Lauflängen sind Rückschlüsse auf die Bahnspannung des Anpressbands und/oder auf den Verlauf des Anpressbands möglich.

Der Unteranspruch 3 gibt bevorzugte Stellen zur Ermittlung der Lauflängen des Anpressbands an. Durch Erfassung der äußeren Rand-Lauflängen sind so Unterschiede in den Lauflängen besonders einfach und deutlich erkennbar.

Die Einstellung der Bandspann- und Bandlaufregelwalze nach Unteranspruch 4 führt zu einer besonders homogenen bzw. niedrigen Spannung des Anpressbands, was wiederum eine sehr hohe Lebensdauer des Anpressbands zufolge hat. Außerdem wirkt sich dies positiv auf die Qualität der Wellpappebahn aus.

Die Ausgestaltung nach Unteranspruch 5 ermöglicht eine drehbare Lagerung der Bandspann- und Bandlaufregelwalze. Es ist von Vorteil, wenn die Bandspann- und Bandlaufregelwalze in die Lagereinrichtung eingreift. Alternativ greift die Lagereinrichtung in die Bandspann- und Bandlaufregelwalze stirnseitig ein.

In dem Unteranspruch 5 ist außerdem eine bevorzugte Lagerung der Bandspann- und Bandlaufregelwalze angegeben. Die Bandspann- und Bandlaufregelwalze ist beidseitig durch die Lagerkörper der Lagereinrichtung drehbar gelagert. Vorzugsweise hat die Bandspann- und Bandlaufregelwalze zwei endseitige Lagerzapfen, die in die Lagerkörper eingreifen bzw. diese durchsetzen. Die Lagerkörper haben dann Lageröffnungen zur Aufnahme der Lagerzapfen. Alternativ greifen die Lagerkörper in die Bandspann- und Bandlaufregelwalze stirnseitig ein.

Gemäß dem Unteranspruch 6 ist jeder der Lagerkörper über einen Anlenkkörper, wie einen Bolzen, Stift oder dergleichen, an einem jeweiligen Hebelteil angelenkt. Der Anlenkkörper gibt eine Schwenkachse für den Lagerkörper bzw. die Bandspann- und Bandlaufregelwalze vor.

Die Bandspann-Stellmittel nach Unteranspruch 7 sind vorzugsweise in ihrer Länge verstellbar bzw. teleskopierbar. Sie sind vorzugsweise beabstandet zu den Anlenkkörpern exzentrisch an den Lagerkörpern und den Hebelteilen angelenkt. Es ist von Vorteil, wenn die Bandspann- und Bandlaufregelwalzen-Längsmittelachse im Wesentlichen zwischen dem Anlenkkörper und einem Kopplungskörper verläuft, der das Bandspann-Stellmittel mit dem Hebelteil koppelt.

Die Kopplungsglieder nach Unteranspruch 8 sind vorzugsweise als Arme, Hebel oder dergleichen ausgeführt. Es ist von Vorteil, wenn die Kopplungsglieder beabstandet zu den Anlenkkörpern exzentrisch an den Hebelteilen angeordnet sind. Vorzugsweise verlaufen die Kopplungsglieder parallel zueinander. Die Kopplungsteile sind beispielsweise Kopplungsstifte.

Gemäß dem Unteranspruch 9 sind die Kopplungsglieder über eine Synchronwelle über Anschlussmittel miteinander gekoppelt. Die Anschlussmittel sind vorzugsweise als Anschlusszapfen ausgebildet. Die Anschlussmittel und die Kopplungsglieder sind gelenkig miteinander verbunden. Die Anschlussmittel stehen mit der Synchronwelle in drehfester Verbindung. Es ist von Vorteil, wenn die Synchronwelle eine Synchronwellen-Längsmittelachse aufweist, wobei die Anschlussmittelachsen der Anschlussmittel mit einem identischen Betrag versetzt bzw. beabstandet zu der Synchronwellen-Längsmittelachse verlaufen. Die Synchronwellen-Längsmittelachse verläuft so zwischen den Kopplungsachsen bzw. den Anschlussmittelachsen. Wenn die Bandspann- und Bandlaufregelwalze an einer ersten Seite um einen Betrag örtlich versetzt wird, wird die andere Seite um den gleichen Betrag umgekehrt örtlich versetzt. Wenn also auf der einen Seite beispielsweise die Bandspann- und Bandlaufregelwalze angehoben wird, so wird sie auf der anderen Seite gleichzeitig entsprechend abgesenkt. Der virtuelle Kipppunkt der Bandspann- und Bandlaufregelwalze liegt vorzugsweise im Wesentlichen mittig bezüglich der Längserstreckung der Synchronwelle auf der Bandspann- und Bandlaufregelwalzen-Längsmittelachse.

Gemäß dem Unteranspruch 10 sind die Kopplungsglieder bzw. Hebelteile durch einen Stellaktuator verschwenkbar. Es ist von Vorteil, wenn der Stellaktuator mit der Synchronwelle zum Verschwenken derselben um ihre Synchronwellen-Längsmittelachse direkt oder indirekt gekoppelt ist. Ein Verschwenken der Synchronwelle um ihre Synchronwellen-Längsmittelachse hat wiederum ein Verschwenken der Anschlussmittel um die Synchronwellen-Längsmittelachse zufolge, was wiederum ein Verschwenken der Kopplungsglieder zufolge hat, die an die Hebelteile über die Kopplungsteile angeschlossen sind. Durch die gleichmäßige, von beiden Seiten der Bandspann- und Bandlaufregelwalze aus bewirkte Verkippung der Bandspann- und Bandlaufregelwalze gegenüber der Umlenkwalze treten nur geringe Lauflängen-Differenzen des Anpressbands bei Verkippung der Bandspann- und Bandlaufregelwalze gegenüber der Umlenkwalze auf. Bei der Verkippung der Bandspann- und Bandlaufregelwalze gegenüber der Umlenkwalze erfolgt eine beidseitige Verlagerung bzw. Verkippung der Bandspann- und Bandlaufregelwalze gegenüber, der Umlenkwalze. Ferner sind so nur geringe Regelkräfte erforderlich.

Alternativ greift der Stellaktuator an eines der Kopplungsglieder an.

Das Schwenk-Lagermittel nach Unteranspruch 11 ist vorzugsweise als Lageröffnung ausgeführt. Es kann alternativ aber auch ein Lagerzapfen oder dergleichen sein. Die Hebelteile sind vorzugsweise an einem Maschinengehäuse, Maschinengestell oder dergleichen angelenkt. Das Schwenk-Lagermittel ist zwischen dem das Bandspann-Stellmittel an das Hebelteil koppelnden Kopplungskörper und dem Kopplungsteil angeordnet.

Nachfolgend wird unter Bezugnahme auf die beigefügte Zeichnung eine bevorzugte Ausführungsform der Erfindung beispielhaft beschrieben. Dabei zeigen:
- Fig. 1: einen Teil einer Wellpappe-Anlage mit erfindungsgemäßen Anordnungen zur Herstellung einseitig kaschierter Wellpappebahnen,

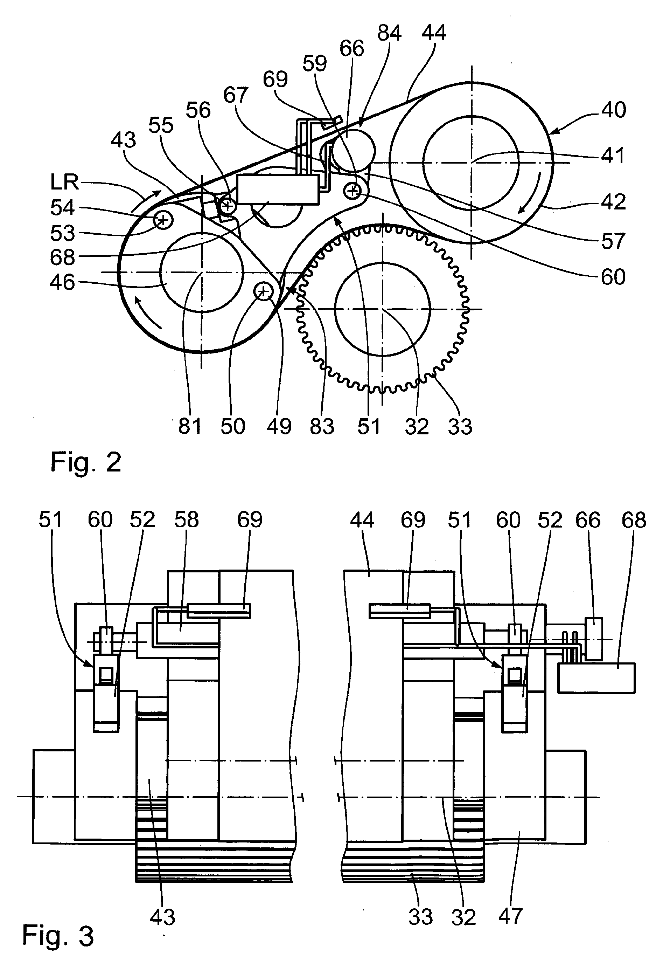

- Fig. 2: ein benachbart zu einer ersten Riffelwalze angeordnetes Anpressband-Modul einer der in Fig. 1 dargestellten erfindungsgemäßen Anordnung zur Herstellung einer einseitig kaschierten Wellpappebahn,
- Fig. 3: eine Draufsicht auf das in Fig. 2 dargestellte Anpressband-Modul und die erste Riffelwalze,

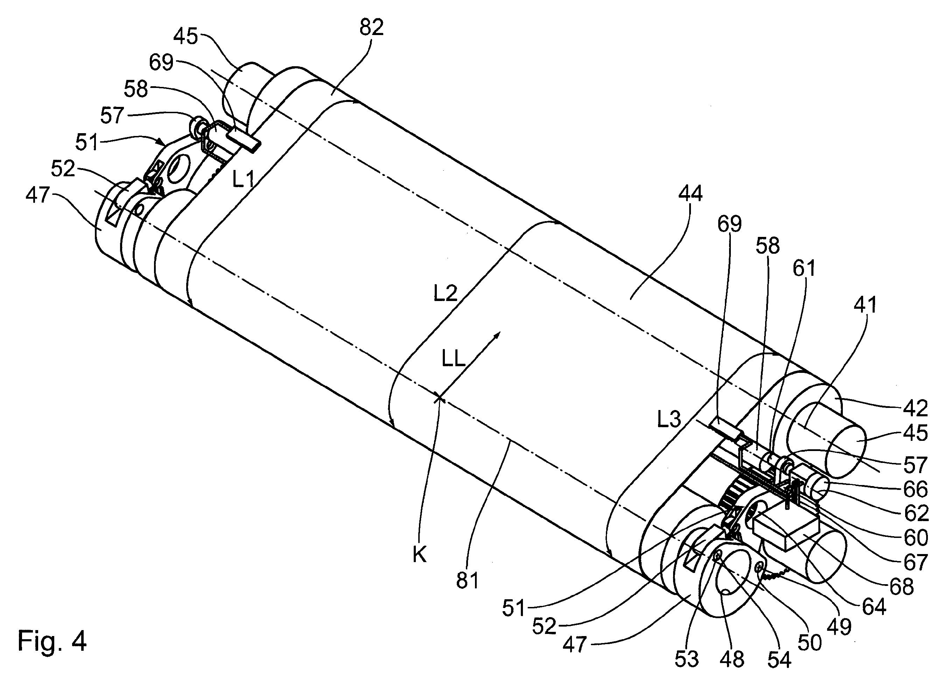

- Fig. 4: eine perspektivische Ansicht des in den Fig. 2 und 3 dargestellten Anpressband-Moduls und der ersten Riffelwalze,

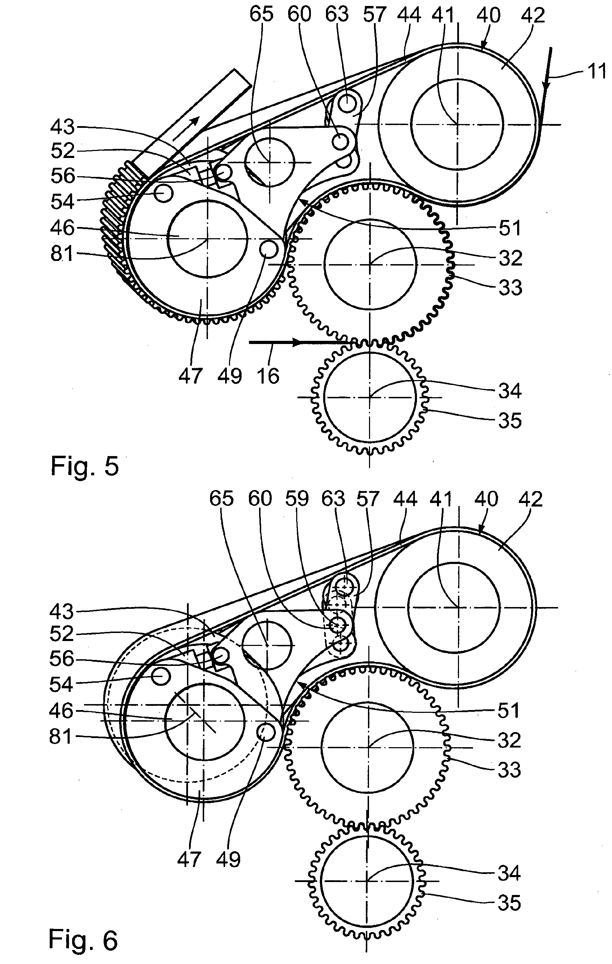

- Fig. 5: eine Seitenansicht des in den Fig. 2 bis 4 dargestellten Anpressband-Moduls und der ersten Riffelwalze sowie einer zweiten Riffelwalze, wobei sich die Bandspann- und Bandlaufregelwalze in einer ersten Position befindet,
- Fig. 6: eine der Fig. 5 entsprechende Ansicht mit verdeckt dargestellten Linien,

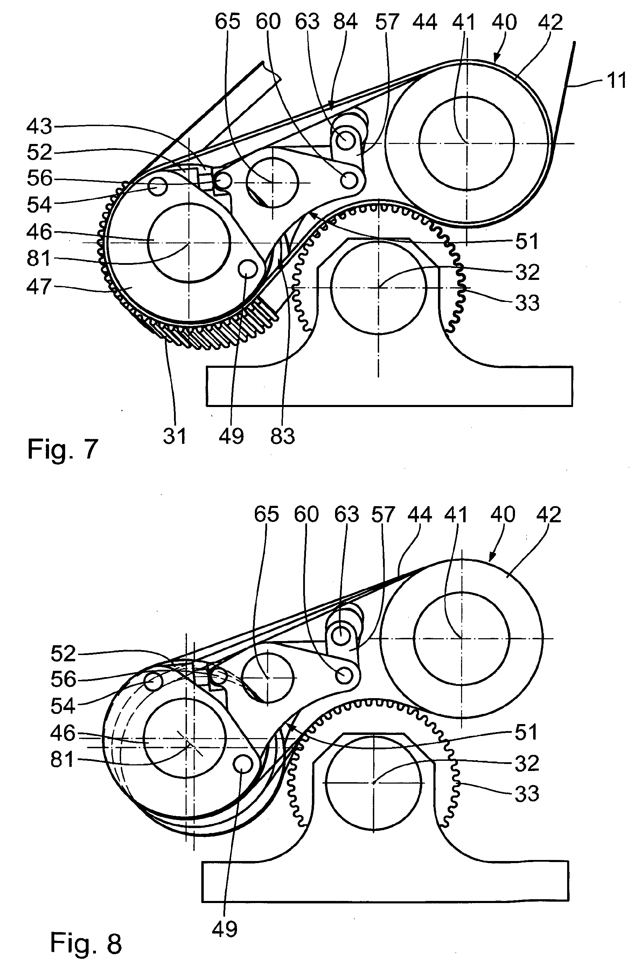

- Fig. 7: eine der Fig. 5 entsprechende Ansicht, wobei sich die Bandspann- und Bandlaufregelwalze in einer zweiten Position befindet,
- Fig. 8: eine der Fig. 7 entsprechende Ansicht mit verdeckt dargestellten Linien,
- Fig. 9: eine Seitenansicht des in den Fig. 2 bis 8 dargestellten Anpressband-Moduls und der ersten Riffelwalze, wobei sich die Bandspann- und Bandlaufregelwalze in einer weiteren Position befindet, und
- Fig. 10: eine der Fig. 9 entsprechende Ansicht, wobei noch verschiedene Hebellängen eingezeichnet sind.

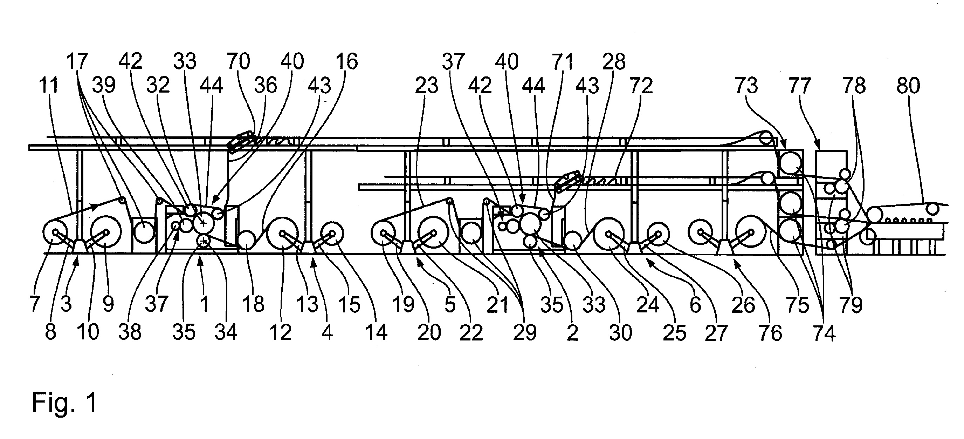

Eine Wellpappe-Anlage, wie sie in Fig. 1 teilweise, schematisch dargestellt ist, umfasst eine erste Anordnung 1 zur Herstellung einer einseitig kaschierten, endlosen Wellpappebahn und eine zweite Anordnung 2 zur Herstellung einer einseitig kaschierten, endlosen Wellpappebahn.

Der ersten Anordnung 1 zur Herstellung einer einseitig kaschierten, endlosen Wellpappebahn sind eine erste Splice-Einrichtung 3 und eine zweite Splice-Einrichtung 4 zugeordnet, während der zweiten Anordnung 2 zur Herstellung einer einseitig kaschierten, endlosen Wellpappebahn eine dritte Splice-Einrichtung 5 und eine vierte Splice-Einrichtung 6 zugeordnet sind.

Die erste Splice-Einrichtung 3 umfasst zum Abrollen einer endlichen ersten Materialbahn von einer ersten Materialbahnrolle 7 eine erste Abrolleinheit 8 und zum Abrollen einer endlichen zweiten Materialbahn von einer zweiten Materialbahnrolle 9 eine zweite Abrolleinheit 10. Die endliche erste und zweite Materialbahn werden zum Bereitstellen einer endlosen ersten Materialbahn 11 mittels einer nicht dargestellten Verbinde- und Schneideeinheit der ersten Splice-Einrichtung 3 miteinander verbunden. Bei jedem Verbinden der endlichen ersten und zweiten Materialbahnen miteinander entsteht in der endlosen ersten Materialbahn 11 eine erste Verbindungsnaht.

Die zweite Splice-Einrichtung 4 ist entsprechend der ersten Splice-Einrichtung 3 ausgebildet. Diese hat zum Abrollen einer endlichen dritten Materialbahn von einer dritten Materialbahnrolle 12 eine dritte Abrolleinheit 13 und zum Abrollen einer endlichen vierten Materialbahn von einer vierten Materialbahnrolle 14 eine vierte Abrolleinheit 15. Die endliche dritte und vierte Materialbahn werden zum Bereitstellen einer endlosen zweiten Materialbahn 16 mittels einer nicht dargestellten Verbinde- und Schneideeinheit der zweiten Splice-Einrichtung 4 miteinander verbunden. Bei jedem Verbinden der dritten und vierten Materialbahnen miteinander entsteht in der endlosen zweiten Materialbahn 16 eine zweite Verbindungsnaht.

Die endlose erste Materialbahn 11 wird über erste Umlenkrollen 17 und die endlose zweite Materialbahn 16 wird über mindestens eine zweite Umlenkrolle 18 der ersten Anordnung 1 zur Herstellung einer einseitig kaschierten, endlosen Wellpappebahn zugeführt.

Die dritte Splice-Einrichtung 5 ist entsprechend der ersten Splice-Einrichtung 3 ausgebildet. Diese umfasst zum Abrollen einer endlichen fünften Materialbahn von einer fünften Materialbahnrolle 19 eine fünfte Abrolleinheit 20 und zum Abrollen einer endlichen sechsten Materialbahn von einer sechsten Materialbahnrolle 21 eine sechste Abrolleinheit 22. Die endliche fünfte und sechste Materialbahn werden zum Bereitstellen einer endlosen dritten Materialbahn 23 mittels einer nicht dargestellten Verbinde- und Schneideinheit der dritten Splice-Einrichtung 5 miteinander verbunden. Bei jedem Verbinden der fünften und sechsten Materialbahnen miteinander entsteht in der endlosen dritten Materialbahn 23 eine dritte Verbindungsnaht.

Die vierte Splice-Einrichtung 6 ist im Wesentlichen entsprechend der zweiten Splice-Einrichtung 4 ausgebildet. Diese umfasst zum Abrollen einer endlichen siebten Materialbahn von einer siebten Materialbahnrolle 24 eine siebte Abrolleinheit 25 und zum Abrollen einer endlichen achten Materialbahn von einer achten Materialbahnrolle 26 eine achte Abrolleinheit 27. Die endliche siebte und achte Materialbahn werden zum Bereitstellen einer endlosen vierten Materialbahn 28 mittels einer nicht dargestellten Verbinde- und Schneideinheit der vierten Splice-Einrichtung 6 miteinander verbunden. Bei jedem Verbinden der siebten und achten Materialbahnen miteinander entsteht in der endlosen vierten Materialbahn 28 eine vierte Verbindungsnaht.

Die endlose dritte Materialbahn 23 wird über dritte Umlenkrollen 29 und die endlose vierte Materialbahn 28 wird über mindestens eine vierte Umlenkrolle 30 der zweiten Anordnung 2 zur Herstellung einer einseitig kaschierten, endlosen Wellpappebahn zugeführt.

Die erste Anordnung 1 zur Herstellung einer einseitig kaschierten, endlosen Wellpappebahn umfasst zum Erzeugen einer eine Wellung aufweisenden endlosen ersten Wellbahn 31 aus der endlosen zweiten Materialbahn 16 eine um eine erste Drehachse 32 drehbar gelagerte erste Riffelwalze 33 und eine um eine zweite Drehachse 34 drehbar gelagerte zweite Riffelwalze 35. Die Riffelwalzen 33, 35 bilden zum Durchführen und Riffeln der endlosen zweiten Materialbahn 16 einen Walzenspalt aus, wobei die Drehachsen 32, 34 parallel zueinander verlaufen. Die Riffelwalzen 33, 35 bilden eine Riffeleinrichtung.

Zum Verbinden der endlosen ersten Wellbahn 31 mit der endlosen ersten Materialbahn 11 zu einer einseitig kaschierten, ersten Wellpappebahn 36 weist die erste Anordnung 1 zur Herstellung einer einseitig kaschierten, endlosen Wellpappebahn eine erste Leimauftragseinrichtung 37 auf, die eine erste Leimdosierungswalze 38, einen ersten Leimbehälter (nicht dargestellt) und eine erste Leimauftragswalze 39 umfasst. Zum Durchführen und Beleimen der endlosen ersten Wellbahn 31 bildet die erste Leimauftragswalze 39 mit der ersten Riffelwalze 33 einen Spalt aus, wobei die erste Leimauftragswalze 39 teilweise innerhalb des ersten Leimbehälters angeordnet ist. Der Leim wird auf Spitzen der Wellung aufgetragen. Die erste Leimdosierungswalze 38 liegt gegen die erste Leimauftragswalze 39 an und dient zum Ausbilden einer gleichmäßigen Leimschicht auf der ersten Leimauftragswalze 39.

Die erste Materialbahn 11 wird anschließend mit der mit Leim aus dem Leimbehälter versehenen ersten Wellbahn 31 in der ersten Anordnung 1 zur Herstellung einer einseitig kaschierten, endlosen Wellpappebahn zusammengefügt.

Zum Anpressen der ersten Materialbahn 11 gegen die mit Leim versehene, erste Wellbahn 31, die wiederum bereichsweise an der ersten Riffelwalze 33 anliegt, hat die erste Anordnung 1 zur Herstellung einer einseitig kaschierten, endlosen Wellpappebahn ein Anpressband-Modul 40.

Das Anpressband-Modul 40 ist oberhalb der ersten Riffelwalze 33 angeordnet. Es hat eine um eine dritte Drehachse 41 drehbar gelagerte Umlenkwalze 42 und eine drehbar gelagerte, stromabwärts zu der Umlenkwalze 42 angeordnete Bandspann- und Bandlaufregelwalze 43 sowie ein endloses Anpressband 44, das um die Umlenkwalze 42 und die Bandspannund Bandlaufregelwalze 43 in einer Laufrichtung bzw. Umfangsrichtung LR herumgeführt ist. Die dritte Drehachse 41 ist fix. Die Umlenkwalze 42 hat zwei endseitige Lagerzapfen 45, die in Umlenkwalzen-Lagern (nicht dargestellt) drehbar gelagert sind.

Die erste Riffelwalze 33 greift in einen zwischen der Umlenkwalze 42 und der Bandspann- und Bandlaufregelwalze 43 vorliegenden Raum bereichsweise ein. Das Anpressband 44 wird dabei durch die erste Riffelwalze 33 umgelenkt. Das Anpressband 44 drückt gegen die erste Materialbahn 11, die wiederum gegen die mit Leim versehene, an der ersten Riffelwalze 33 anliegende erste Wellbahn 31 gepresst wird. Es hat in seinen einander gegenüberliegenden äußeren Randbereichen 82 Lauflängen bzw. Umschlingungslängen L1 und L3 und im Wesentlichen mittig dazwischen eine Lauflänge bzw. Umschlingungslänge L2. Idealerweise sind die Lauflängen L1, L2, L3 identisch. Im Betrieb können diese aber ohne Regelung voneinander abweichen.

Die Bandspann- und Bandlaufregelwalze 43 ist in ihrem Abstand gleichmäßig zu der Umlenkwalze 42 veränderbar und ist auch gegenüber dieser um einen Kipppunkt K verkippbar.

Die Bandspann- und Bandlaufregelwalze 43 hat zwei einander gegenüberliegende, endseitige Lagerzapfen 46, die im Querschnitt kreisförmig oder kreisringförmig ausgeführt sind. Die Bandspann- und Bandlaufregelwalze 43 hat eine Längsmittelachse 81. Jeder Lagerzapfen 46 ist in einem Lagerkörper 47 mit einer an den jeweiligen Lagerzapfen 46 angepassten Lageröffnung 48 um die Längsmittelachse 81 drehbar gelagert, die somit auch eine Drehachse bzw. Lagerachse bildet. Jeder Lagerkörper 47 ist über einen Anlenkkörper 49, der eine Schwenkachse 50 vorgibt, an einem Hebelteil 51 angelenkt. Die Lagerkörper 47 sind identisch ausgeführt. Die Hebelteile 51 sind ebenfalls identisch ausgebildet.

Ferner ist funktional zwischen jedem Lagerkörper 47 und dem zugeordneten Hebelteil 51 ein in der Länge verstellbares Bandspann-Stellmittel 52 angeordnet. Vorzugsweise sind die Bandspann-Stellmittel 52 teleskopierbar ausgeführt. Jedes Bandspann-Stellmittel 52 ist über einen eine Schwenkachse 53 vorgebenden Kopplungskörper 54 mit dem jeweiligen Lagerkörper 47 gelenkig verbunden. Bei jedem Lagerkörper 47 sind die Anlenkkörper 49 und die Kopplungskörper 54 beabstandet zu der Lageröffnung 48 und beabstandet zueinander angeordnet. Außerdem ist jedes Bandspann-Stellmittel 52 über einen eine Schwenkachse 55 vorgebenden Kopplungskörper 56 gelenkig mit dem jeweiligen Hebelteil 51 verbunden. In jedem Hebelteil 51 sind außerdem die Anlenkkörper 49 beabstandet zu den Kopplungskörpern 56 angeordnet. Die Schwenkachsen 50, 53, 55 verlaufen parallel zueinander.

Bei einer gleichmäßigen Betätigung der beiden Bandspann-Stellmittel 52 werden die Lagerkörper 47 und die in diesen gelagerte Bandspann- und Bandlaufregelwalze 43 gegenüber den Hebelteilen 51 um die Schwenkachse/n 50 verschwenkt. Die Spannbewegung der Bandspann- und Bandlaufregelwalze 43 ist somit kreisbogenförmig. Dies führt zu einer Veränderung der Spannung in dem Anpressband 44. Wird die Bandspann- und Bandlaufregelwalze 43 von der Umlenkwalze 42 weiter entfernt, so wird die Spannung in dem Anpressband 44 erhöht. Umgekehrt wird die Spannung in dem Anpressband 44 reduziert, wenn sich die Bandspann- und Bandlaufregelwalze 43 der Umlenkwalze 42 nähert.

Die beiden Hebelteile 51 sind im Wesentlichen über Kopplungsglieder 57 und eine Synchronwelle 58 miteinander gekoppelt. An jedem Hebelteil 51 ist über ein eine Schwenkachse 59 vorgebendes Kopplungsteil 60 eines der Kopplungsglieder 57 angelenkt. Bei jedem Hebelteil 51 sind die Schwenkachsen 59 beabstandet zu den Schwenkachsen 55 angeordnet. In jedes Kopplungsglied 57 greift ein Anschlussmittel 61 ein, das endseitig mit der Synchronwelle 58 fest verbunden ist und exzentrisch zu deren Synchronwellen-Längsmittelachse 62 verläuft. Die Anschlussmittel 61 sind zapfenartig ausgeführt und sind an gegenüberliegenden Enden der Synchronwelle 58 angeordnet. Die Anschlussmittel 61 sind in einer gemeinsamen Symmetrieebene angeordnet, die auch durch die Synchronwellen-Längsmittelachse 62 geht. Sie haben einen identischen Abstand zu der Synchronwellen-Längsmittelachse 62 und haben beabstandete bzw. versetzt zueinander verlaufende Anschlussmittelachsen 63. Die Schwenkachsen 59, die Synchronwellen-Längsmittelachse 62 und die Anschlussmittelachsen 63 verlaufen parallel zueinander und parallel zu den Schwenkachsen 50, 53, 55, wenn keine Regelung erfolgt.

Zwischen den Schwenkachsen 55, 59 ist in jedem Hebelteil 51 eine Lageröffnung 64 angeordnet. In jede Lageröffnung 64 greift ein Lagerkörper (nicht dargestellt) ein und gibt so eine Schwenkachse 65 für das jeweilige Hebelteil 51 vor. Die Schwenkachsen 65 sind fix und verlaufen parallel zu den Schwenkachsen 50, wenn keine Regelung erfolgt. Der Lagerkörper ist an dem benachbarten Lagermittel angeordnet, das die Umlenkwalze 42 drehbar lagert.

Die Synchronwelle 58 ist um ihre Synchronwellen-Längsmittelachse 62 mittels eines Schwenkantriebs 66 verschwenkbar, der mit der Synchronwelle 58 direkt oder indirekt gekoppelt ist. Ein Verschwenken der Synchronwelle 58 um ihre Synchronwellen-Längsmittelachse 62 hat wiederum eine Verlagerung der beiden angeschlossenen Anschlussmittel 61 um die Synchronwellen-Längsmittelachse 62 zufolge. Durch die Kopplung zwischen den Anschlussmitteln 61 mit den Kopplungsgliedern 57 werden diese dann auch um die Kopplungsteile 60 bzw. deren Schwenkachse 59 verschwenkt. Die Kopplungsteile 60 stehen wiederum mit den beiden Hebelteilen 51 in gelenkiger Verbindung. Durch die Kopplung der beiden Hebelteile 51 über die Synchronwelle 58 werden die beiden Hebelteile 51 gegensinnig zueinander verschwenkt, was somit eine Verkippung der Bandspann- und Bandlaufregelwalze 53 um den Kipppunkt K zufolge hat. Die Anschlussmittel 61 bzw. Hebelteile 51 werden betragsgleich verschwenkt. Wenn also das eine Hebelteil 51 nach oben bewegt wird, wird das andere Hebelteil 51 wegen der Kopplung entsprechend betragsgleich abgesenkt. Die Bandlaufregel-Bewegung der Bandspann- und Bandlaufregelwalze 43 ist somit kreisbogenförmig. Vorzugsweise ändern sich die Lauflängen L1, L2, L3 des Anpressbands 44 bei der Verkippung der Bandspann- und Bandlaufregelwalze 43 nur marginal. Es ist von Vorteil, wenn es zur Verstellung der Synchronwelle 58 im Wesentlichen keines Verstellmomentes bedarf.

Beim Verkippen der Bandspann- und Bandlaufregelwalze 43 gegenüber der Umlenkwalzen-Längsmittelachse 41 zum Verändern des Verlaufs des Anpressbands 44 bleibt die Spannung in dem Anpressband 44 über dessen Breite im Wesentlichen unverändert. Das Verstellen der Bandspann- und Bandlaufregelwalze 43 durch die Bandlaufregel-Verstelleinrichtung 84 erfolgt also derart, dass die Spannung in dem Anpressband 44 über dessen Breite im Wesentlichen unverändert bleibt bzw. höchstens eine marginale Änderung erfährt. Aus dem Stand der Technik sind Anpressband-Module bekannt, bei denen sich im Gegensatz dazu bei einer Verkippung einer Regelwalze zum Verändern des Verlaufs eines Anpressbands die Spannung in dem Anpressband über dessen Breite verändert. Ferner kennt der Stand der Technik Anpressband-Module mit Bandspannwalzen und Bandlaufregelwalzen, wobei bei der gemeinsamen Verstellung einer Bandspannwalze und Bandlaufregelwalze die Spannung des Anpressbands im Wesentlichen unverändert bleibt. Die letztgenannten Anpressband-Module sind jedoch aufwendig.

Der Schwenkantrieb 66 steht über eine Signalleitung 67 mit einer Regeleinrichtung 68 in Signalverbindung. Ferner stehen zwei Erfassungssensoren 69 mit der Regeleinrichtung 68 in Signalverbindung. Die Erfassungssensoren 69 sind derart ausgerichtet, dass sie die Randbereiche 82 des Anpressbands 44 und einen Mittenbereich des Anpressbands 44 zwischen der Umlenkwalze 42 und der Bandspann- und Bandlaufregelwalze 43 im Wesentlichen gegenüberliegend zu der ersten Riffelwalze 33 erfassen. Die Lauflängen L1, L2, L3 werden dann bestimmt. Die Bandspann- und Bandlaufregelwalze 43 wird dann gegebenenfalls derart verstellt, dass die Lauflängen L1, L2 und L3 im Wesentlichen identisch sind. Die Bahnspannung wird gegebenenfalls entsprechend eingestellt. Der Kipppunkt K liegt im Wesentlichen auf einer resultierenden Linienlast LL des Anspressbands 44. Die Linienlast LL verläuft im Wesentlichen senkrecht zu den Bandlaufregel-Bewegungen der Bandspann- und Bandlaufregelwalze 43.

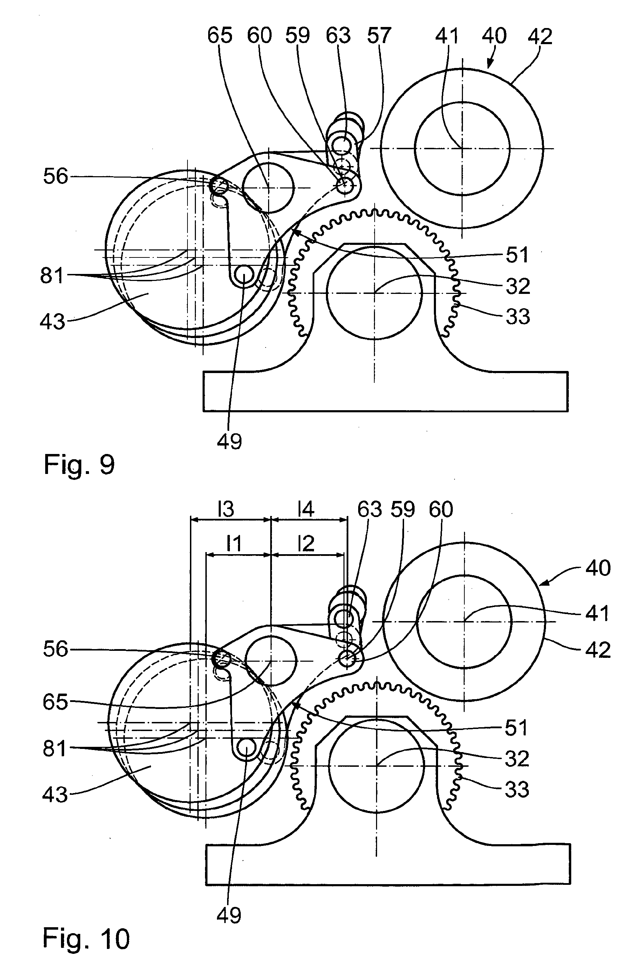

In Fig. 10 sind Hebelarmlängen 11, 12, 13 und 14 eingezeichnet, die allesamt von der Schwenkachse 65 ausgehen. Der erste Hebelarm 11 geht dabei bis zu der Längsmittelachse 81 der Bandspann- und Bandlaufregelwalze 43, wenn sich diese in einer ersten Bandlaufregel-Endposition befindet. Der Hebelarm 13 geht bis zu der Längsmittelachse 81 der Bandspann- und Bandlaufregelwalze 43, wenn sich diese in der anderen, zweiten Bandlaufregel-Endposition befindet. Die Hebelarme 12 und 14 gehen jeweils auf die Schwenkachse 59 in deren jeweiligen Endposition. Es ist von Vorteil, wenn die Verhältnisse 11 zu 12 und 13 zu 14 im Wesentlichen identisch sind.

Im Wesentlichen durch die Lagerkörper 47 und die Anlenkkörper 49 wird eine Bandspann-Verstelleinrichtung 83 gebildet.

Im Wesentlichen durch die Hebelteile 51, die Kopplungsglieder 57, die Kopplungsteile 60, die Anschlussmittel 61 und die Synchronwelle 58 wird eine Bandlaufregel-Verstelleinrichtung 84 gebildet.

Die Bandspann-Verstelleinrichtung 83 und die Bandlaufregel-Verstelleinrichtung 84 bilden eine Bandspann- und Bandlaufregelwalzen-Verstellvorrichtung 83, 84.

Der Schwenkantrieb 66 bildet einen Stellaktuator. Der Schwenkantrieb 66 und das Bandspann-Stellmittel 52 bilden eine Stellvorrichtung. Sie sind gemeinsam oder getrennt betätigbar.

Zum Zwischenspeichern und Puffern der einseitig kaschierten ersten Wellpappebahn 36 wird diese einer ersten Speichereinrichtung 70 zugeführt, wo diese Schleifen aufweist.

Die zweite Anordnung 2 ist identisch zu der ersten Anordnung 1 ausgebildet. Auf die vorherige Beschreibung wird verwiesen. Die vierte Materialbahn 28 wird durch die Riffelwalzen 33, 35 geriffelt, so dass dann eine zweite Wellbahn vorliegt. Die zweite Wellbahn wird mit der dritten Materialbahn 23 verbunden, so dass eine zweite einseitig kaschierte Wellpappebahn 71 entsteht. Die zweite Wellpappebahn 71 wird in einer zweiten Speichereinrichtung 72 gespeichert und gepuffert.

Stromabwärts zu den Speichereinrichtungen 70, 72 befindet sich eine Vorheizeinrichtung 73, die drei übereinander angeordnete Heizwalzen 74 umfasst. Der Vorheizeinrichtung 73 werden die erste einseitig kaschierte Wellpappebahn 36 und die zweite einseitig kaschierte Wellpappebahn 71 sowie eine Deckbahn 75 von einer fünften Splice-Einrichtung 76 zugeführt und umschlingen teilweise die jeweilige Heizwalze 74.

Hinter der Vorheizeinrichtung 73 ist ein Leimwerk 77 mit zwei übereinander angeordneten Beleimungswalzen 78 angeordnet, die teilweise in ein Leimbad 79 eingetaucht sind. Die einseitig kaschierten Wellpappebahnen 36, 71 befinden sich in Kontakt mit der jeweiligen Beleimungswalze 78.

Hinter dem Leimwerk 77 ist eine Heizvorrichtung 80 angeordnet. In der Heizvorrichtung 80 werden die einseitig kaschierten Wellpappebahnen 36, 71 und die Deckbahn 75 aneinander gedrückt und miteinander verleimt.

## Patentansprüche

1. Anordnung zur Herstellung einer einseitig kaschierten, endlosen Wellpappebahn (36, 71),
a) mit einer ersten Riffelwalze (33) und einer zweiten Riffelwalze (35) zum Erzeugen einer eine Wellung aufweisenden Wellbahn (31),
b) mit einer Leimauftragseinrichtung (37) zum Auftragen von Leim auf Spitzen der Wellung, und
c) mit einem Anpressband-Modul (40), das umfasst
i) eine Umlenkwalze (42),
- die eine Umlenkwalzen-Längsmittelachse (41) aufweist,
ii) eine Bandspann- und Bandlaufregelwalze (43),
- die eine Bandspann- und Bandlaufregelwalzen-Längsmittelachse (81) aufweist,
iii) ein um die Umlenkwalze (42) und die Bandspann- und Bandlaufregelwalze (43) geführtes, endloses Anpressband (44) zum Anpressen einer Deckbahn (11, 23) an die mit Leim versehenen Spitzen der an der ersten Riffelwalze (33) bereichsweise anliegenden Wellbahn (31),
iv) eine Bandspann- und Bandlaufregelwalzen-Verstellvorrichtung (83, 84) zum Verstellen der Bandspann- und Bandlaufregelwalze (43), wobei die Bandspann- und Bandlaufregelwalzen-Verstellvorrichtung (83, 84) umfasst
- eine Bandspann-Verstelleinrichtung (83) zum Spannen des Anpressbands (44) durch gleichmäßiges Verändern des Abstands der Bandspann- und Bandlaufregelwalzen-Längsmittelache (81) zu der Umlenkwalzen-Längsmittelachse (41) über die Bandspann- und Bandlaufregelwalzen-Längsmittelachse (81), und
- eine Bandlaufregel-Verstelleinrichtung (84) zum Verstellen des Verlaufs des Anpressbands (44) durch Verkippen der Bandspann- und Bandlaufregelwalzen-Längsmittelachse (81) gegenüber der Umlenkwalzen-Längsmittelachse (41),
v) eine dem Anpressband (44) zugeordnete Anpressband-Erfassungseinrichtung (69),
vi) eine Anpressband-Regeleinrichtung (68), die mit der Anpressband-Erfassungseinrichtung (69) in Signalverbindung steht, und
vii) eine mit der Bandspann- und Bandlaufregelwalzen-Verstellvorrichtung (83, 84) in Verbindung stehende Stellvorrichtung (52, 66) zum Verstellen der Bandspann- und Bandlaufregelwalze (43) in Abhängigkeit von der Anpressband-Regeleinrichtung (68) empfangener Regelsignale,
- wobei die Stellvorrichtung mindestens ein Bandspann-Stellmittel (52) umfasst,
**dadurch gekennzeichnet, dass**
d) die Stellvorrichtung außerdem mindestens einen Bandlaufregel-Stellaktuator (66) umfasst, und
e) ein Verkippen der Bandspann- und Bandlaufregelwalze (43) gegenüber der Umlenkwalzen-Längsmittelachse (41) zum Verstellen des Verlaufs des Anpressbands (44) derart erfolgt, dass die Spannung des Anpressbands (44) über dessen Breite im Wesentlichen unverändert bleibt.

2. Anordnung nach Anspruch 1, **dadurch gekennzeichnet, dass** die Anpressband-Erfassungseinrichtung (69) mindestens zwei über die Breite des Anpressbands (44) zueinander beabstandete Lauflängen (L1, L2, L3) des Anpressbands (44) in dessen Laufrichtung (LR) erfasst.

3. Anordnung nach Anspruch 1 oder 2, **dadurch gekennzeichnet, dass** die Anpressband-Erfassungseinrichtung (69) zwei Rand-Lauflängen (L1, L3) des Anpressbands (44) in dessen Laufrichtung (LR) in einander gegenüberliegenden Randbereichen (82) des Anpressbands (44) und eine zwischen diesen vorliegende, mittlere Lauflänge (L2) des Anpressbands (44) in dessen Laufrichtung (LR) erfasst.

4. Anordnung nach Anspruch 2 oder 3, **dadurch gekennzeichnet, dass** die Stellvorrichtung (52, 66) die Bandspann- und Bandlaufregelwalze (43) derart einstellt, dass die Lauflängen (L1, L2, L3) des Anpressbands (44) über dessen Breite im Wesentlichen identisch sind.

5. Anordnung nach einem der vorherigen Ansprüche, **dadurch gekennzeichnet, dass** die Bandspann- und Bandlaufregelwalze (43) in einer Lagereinrichtung (47) drehbar gelagert ist, wobei vorzugsweise die Lagereinrichtung (47) endseitig zu der Bandspann- und Bandlaufregelwalze (43) angeordnete, eine jeweilige Lagerachse (81) vorgebende Lagerkörper (47) zur drehbaren Lagerung der Bandspann- und Bandlaufregelwalze (43) umfasst.

6. Anordnung nach Anspruch 5, **dadurch gekennzeichnet, dass** jeder der Lagerkörper (47) exzentrisch zu der Lagerachse (81) über einen Anlenkkörper (49) an einem jeweiligen Hebelteil (51) angelenkt ist und gegenüber dem Hebelteil (51) verschwenkbar ist.

7. Anordnung nach Anspruch 6, **dadurch gekennzeichnet, dass** jeweils eines der Bandspann-Stellmittel (52) zwischen einem der Lagerkörper (47) und einem der Hebelteile (51) zum gleichmäßigen Verschwenken der Lagerkörper (47) um die Anlenkkörper (49) wirkt.

8. Anordnung nach Anspruch 6 oder 7, **dadurch gekennzeichnet, dass** die Bandlaufregel-Verstelleinrichtung (84) Kopplungsglieder (57) umfasst, wobei jedes der Kopplungsglieder (57) mit einem der Hebelteile (51) über ein Kopplungsteil (60) verbunden ist.

9. Anordnung nach Anspruch 8, **dadurch gekennzeichnet, dass** die Kopplungsglieder (57) über eine Synchronwelle (58) über Anschlussmittel (61) miteinander gekoppelt sind, wobei die Anschlussmittel (61) parallel und beabstandet zueinander verlaufende, einen identischen Abstand zu einer Synchronwellen-Längsmittelachse (62) aufweisende Anschlussmittelachsen (63) zum gegensinnigen, betragsgleichen Versetzen der Hebelteile (51) haben.

10. Anordnung nach Anspruch 8 oder 9, **dadurch gekennzeichnet, dass** die Kopplungsglieder (57) durch den mindestens einen Stellaktuator (66) verschwenkbar sind.

11. Anordnung nach einem der Ansprüche 8 bis 10, **dadurch gekennzeichnet, dass** jedes Hebelteil (51) zwischen dem Anlenkkörper (49) und dem Kopplungsteil (60) ein Schwenk-Lagermittel (64) zu seiner schwenkbaren Anordnung umfasst.

12. Anordnung nach einem der vorherigen Ansprüche, **dadurch gekennzeichnet, dass** die Bandspann- und Bandlaufregelwalze (43) um einen Kipppunkt (K) verkippbar ist, wobei der Kipppunkt (K) im Wesentlichen auf einer resultierenden Linienlast (LL) des Anpressbands (44) liegt.

13. Anordnung nach einem der vorherigen Ansprüche, **dadurch gekennzeichnet, dass** zur Verkippung der Bandspann- und Bandlaufregelwalze (43) gegenüber der Umlenkwalze (42) bei einer örtlichen Versetzung der Bandspann- und Bandlaufregelwalze (43) um einen Betrag an einer ersten Seite eine umgekehrte örtliche Versetzung der anderen Seite der Bandspann- und Bandlaufregelwalze (43) um den gleichen Betrag erfolgt.

14. Anordnung nach einem der vorherigen Ansprüche, **dadurch gekennzeichnet, dass** die gleichmäßige Veränderung des Abstands der Bandspann- und Bandlaufregelwalze (43) zu der Umlenkwalze (42) bogenförmig, bevorzugter kreisbogenförmig, erfolgt.

15. Anordnung nach einem der vorherigen Ansprüche, **dadurch gekennzeichnet, dass** ein Verkippen der Bandspann- und Bandlaufregelwalze (43) gegenüber der Umlenkwalzen-Längsmittelachse (41) zum Verstellen des Verlaufs des Anpressbands (44) derart erfolgt, dass die Lauflängen (L1, L2, L3) des Anpressbands (44) über dessen Breite im Wesentlichen identisch bleiben.

## Claims

1. Arrangement for producing a continuous corrugated board web (36, 71), which is laminated on one side,
a) with a first corrugating roller (33) and a second corrugating roller (35) to produce a corrugated web (31) having a corrugation,
b) with a glue application mechanism (37) for applying glue to tips of the corrugation, and
c) with a pressure belt module (40), which comprises
i) a deflection roller (42),
- which has a deflection roller longitudinal centre axis (41),
ii) a belt tensioning and belt running regulating roller (43),
- which has a belt tensioning and belt running regulating roller longitudinal centre axis (81),
iii) a continuous pressure belt (44) guided about the deflection roller (42) and the belt tensioning and belt running regulating roller (43) to press a cover web (11, 23) onto the tips, which are provided with glue, of the corrugated web (31) resting, in regions, on the first corrugating roller (33),
iv) a belt tensioning and belt running regulating roller adjustment device (83, 84) to adjust the belt tensioning and belt running regulating roller (43), wherein the belt tensioning and belt running regulating roller adjustment device (83, 84) comprises
- a belt tensioning adjustment device (83) for tensioning the pressure belt (44) by uniformly changing the spacing of the belt tensioning and belt running regulating roller longitudinal centre axis (81) to the deflection roller longitudinal centre axis (41) over the belt tensioning and belt running regulating roller longitudinal centre axis (81), and
- a belt running regulating adjustment device (84) to adjust the course of the pressure belt (44) by tilting the belt tensioning and belt running regulating roller longitudinal centre axis (81) relative to the deflection roller longitudinal centre axis (41),
v) a pressure belt detection mechanism (69) associated with the pressure belt (44),
vi) a pressure belt control mechanism (68), which is in signal connection with the pressure belt detection mechanism (69), and
vii) an adjusting device (52, 66), which is connected to the belt tensioning and belt running regulating roller adjustment device (83, 84), to adjust the belt tensioning and belt running regulating roller (43) depending on control signals received from the pressure belt control mechanism (68),
- wherein the adjusting device comprises at least one belt tensioning adjusting means (52),
**characterized in that**
d) the adjusting device further comprises at least one belt running adjusting actuator (66), and
e) a tilting of the belt tensioning and belt running regulating roller (43) relative to the deflection roller longitudinal centre axis (41) for adjusting the direction of the pressure belt (44) takes place in such a way that the tension of the pressure belt (44) over the width thereof substantially remains unchanged.

2. Arrangement according to claim 1, **characterized in that** the pressure belt detection mechanism (69) detects at least two running lengths (L1, L2, L3), which are spaced apart from one another over the width of the pressure belt (44), of the pressure belt (44) in the running direction (LR) thereof.

3. Arrangement according to claim 1 or 2, **characterized in that** the pressure belt detection mechanism (69) detects two edge running lengths (L1, L3) of the pressure belt (44) in the running direction (LR) thereof in mutually opposing edge regions (82) of the pressure belt (44) and a central running length (L2) present between them of the pressure belt (44) in the running direction (LR) thereof.

4. Arrangement according to claim 2 or 3, **characterized in that** the adjusting device (52, 66) adjusts the belt tensioning and belt running regulating roller (43) in such a way that the running lengths (L1, L2, L3) of the pressure belt (44) are substantially identical over the width thereof.

5. Arrangement according to any one of the preceding claims, **characterized in that** the belt tensioning and belt running regulating roller (43) is rotatably mounted in a bearing mechanism (47), wherein preferably the bearing mechanism (47) comprises bearing bodies (47), which are arranged at the end with respect to the belt tensioning and belt running regulating roller (43) and predetermine a respective bearing axis (81), for the rotatable mounting of the belt tensioning and belt running regulating roller (43).

6. Arrangement according to claim 5, **characterized in that** each of the bearing bodies (47) is eccentrically articulated with respect to the bearing axis (81) by means of an articulation body (49) on a respective lever part (51) and can be pivoted relative to the lever part (51).

7. Arrangement according to claim 6, **characterized in that** one of the belt tensioning adjusting means (52) in each case acts between one of the bearing bodies (47) and one of the lever parts (51) for the uniform pivoting of the bearing bodies (47) about the articulation body (49).

8. Arrangement according to claim 6 or 7, **characterized in that** the belt running regulating adjustment mechanism (84) comprises coupling members (57), each of the coupling members (57) being connected to one of the lever parts (51) by means of a coupling part (60).

9. Arrangement according to claim 8, **characterized in that** the coupling members (57) are coupled to one another by means of a synchronous shaft (58) by connection means (61), the connection means (61) having connection means axes (63) running parallel and spaced apart with respect to one another and having an identical spacing from a synchronous shaft longitudinal centre axis (62) for the displacement of the lever parts (51) by the same amount in opposite directions.

10. Arrangement according to claim 8 or 9, **characterized in that** the coupling members (57) are pivotable by means of the at least one adjusting actuator (66).

11. Arrangement according to any one of claims 8 to 10, **characterized in that** each lever part (51), between the articulation body (49) and the coupling part (60), comprises a pivot bearing means (64) for its pivotable arrangement.

12. Arrangement according to any one of the preceding claims, **characterized in that** the belt tensioning and belt running regulating roller (43) can be tilted about a tilting point (K), the tilting point (K) being substantially located on a resulting line load (LL) of the pressure belt (44).

13. Arrangement according to any one of the preceding claims, **characterized in that** to tilt the belt tensioning and belt running regulating roller (43) relative to the deflection roller (42) upon a local displacement of the belt tensioning and belt running regulating roller (43) by an amount on a first side, a reverse local displacement of the other side of the belt tensioning and belt running regulating roller (43) takes place by the same amount.

14. Arrangement according to any one of the preceding claims, **characterized in that** the uniform change in the spacing of the belt tensioning and belt running regulating roller (43) to the deflection roller (42) takes place in the form of a curve, preferably in the form of a circular arc.

15. Arrangement according to any one of the preceding claims, **characterized in that** a tilting of the belt tensioning and belt running regulating roller (43) relative to the deflection roller longitudinal centre axis (41) for adjusting the direction of the pressure belt (44) takes place in such a way that the running lengths (L1, L2, L3) of the pressure belt (44) over the width thereof substantially remain identical.

## Revendications

1. Ensemble servant à fabriquer une bande de carton ondulé (36, 71) sans fin, contrecollée sur une face,
a) comprenant un premier cylindre cannelé (33) et un deuxième cylindre cannelé (35) servant à produire une bande ondulée (31) présentant une ondulation,
b) comprenant un système d'application de colle (37) servant à appliquer de la colle sur des pointes de l'ondulation, et
c) comprenant un module de bande de pressage (40), qui comprend
i) un cylindre de renvoi (42),
- qui présente un axe central longitudinal de cylindre de renvoi (41),
ii) un cylindre tendeur de bande et de régulation de défilement de bande (43),
- qui présente un axe central longitudinal de cylindre tendeur de bande et de régulation de défilement de bande (81),
iii) une bande de pressage (44) sans fin guidée autour du cylindre de renvoi (42) et autour du cylindre tendeur de bande et de régulation de défilement de bande (43), servant à presser une bande de recouvrement (11, 23) contre les pointes pourvues de colle de la bande ondulée (31) reposant par endroits au niveau du premier cylindre cannelé (33),
iv) un dispositif d'ajustement de cylindre de tendeur bande et de régulation de défilement de bande (83, 84) servant à ajuster le cylindre tendeur de bande et de régulation de défilement de bande (43), sachant que le dispositif d'ajustement de cylindre tendeur de bande et de régulation de défilement de bande (83, 84) comprend
- un système d'ajustement de tension de bande (83) servant à serrer la bande de pressage (44) en modifiant de manière homogène la distance entre l'axe central longitudinal de cylindre tendeur de bande et de régulation de défilement de bande (81) et l'axe central longitudinal de cylindre de renvoi (41) par l'intermédiaire de l'axe central longitudinal de cylindre tendeur de bande et de régulation de défilement de bande (81), et
- un système d'ajustement de régulation de défilement de bande (84) servant à ajuster le profil de la bande de pressage (44) en faisant basculer l'axe central longitudinal de cylindre tendeur de bande et de régulation de défilement de bande (81) par rapport à l'axe central longitudinal de cylindre de renvoi (41),
v) un système de détection de bande de pressage (69) associé à la bande de pressage (44),
vi) un système de régulation de bande de pressage (68), qui se trouve en liaison par signaux avec le système de détection de bande de pressage (69), et
vii) un dispositif de réglage (52, 66) se trouvant en liaison avec le dispositif d'ajustement de cylindre tendeur de bande et de régulation de défilement de bande (83, 84), servant à ajuster le cylindre de tendeur bande et de régulation de défilement de bande (43) en fonction de signaux de régulation reçus par le système de régulation de bande de pressage (68),
- sachant que le dispositif de réglage comprend au moins un moyen de réglage de tension de bande (52),
**caractérisé en ce**
d) **que** le dispositif de réglage comprend en outre au moins un actionneur de réglage de régulation de défilement de bande (66), et
e) en ce qu'un basculement du cylindre tendeur de bande et de régulation de défilement de bande (43) est effectué par rapport à l'axe central longitudinal de cylindre de renvoi (41) aux fins de l'ajustement du profil de la bande de pressage (44) de telle manière que la tension de la bande de pressage (44) reste essentiellement inchangée sur toute sa largeur.

2. Ensemble selon la revendication 1, **caractérisé en ce que** le système de détection de bande de pressage (69) détecte au moins deux longueurs de défilement (L1, L2, L3), espacées les unes des autres sur la largeur de la bande de pressage (44), de la bande de pressage (44) dans la direction de défilement (LR) de cette dernière.

3. Ensemble selon la revendication 1 ou 2, **caractérisé en ce que** le système de détection de bande de pressage (69) détecte deux longueurs de défilement en bordure (L1, L3) de la bande de pressage (44) dans le sens de défilement (LR) de cette dernière dans des zones de bordure (82) se faisant face de la bande de pressage (44) et une longueur de défilement (L2) moyenne, présente entre lesdites zones de bordure, de la bande de pressage (44) dans le sens de défilement (LR) de cette dernière.

4. Ensemble selon la revendication 2 ou 3, **caractérisé en ce que** le dispositif de réglage (52, 66) règle le cylindre tendeur de bande et de régulation de défilement de bande (43) de telle manière que les longueurs de défilement (L1, L2, L3) de la bande de pressage (44) sont essentiellement identiques sur la largeur de cette dernière.

5. Ensemble selon l'une quelconque des revendications précédentes, **caractérisé en ce que** le cylindre tendeur de bande et de régulation de défilement de bande (43) est monté de manière à pouvoir tourner dans un système de palier (47), sachant que de préférence le système de palier (47) comprend des corps de palier (47) disposés côté extrémité par rapport au cylindre tendeur de bande et de régulation de défilement de bande (43), spécifiant un axe de palier (81) respectif, servant au support en rotation du cylindre tendeur de bande et de régulation de défilement de bande (43).

6. Ensemble selon la revendication 5, **caractérisé en ce que** chacun des corps de palier (47) est articulé au niveau d'une partie formant levier (51) respective de manière excentrique par rapport à l'axe de palier (81) par l'intermédiaire d'un corps d'articulation (49) et peut pivoter par rapport à la partie formant palier (51).

7. Ensemble selon la revendication 6, **caractérisé en ce que** respectivement un des moyens de réglage de tension de bande (52) agit entre un des corps de palier (47) et une des parties formant levier (51) afin de faire pivoter de manière homogène les corps de palier (47) autour des corps d'articulation (49).

8. Ensemble selon la revendication 6 ou 7, **caractérisé en ce que** le système d'ajustement de régulation de défilement de bande (84) comprend des organes de couplage (57), sachant que chaque organe de couplage (57) est relié, par l'intermédiaire d'une partie de couplage (60), à l'une des parties formant levier (51).

9. Ensemble selon la revendication 8, **caractérisé en ce que** les organes de couplage (57) sont couplés entre eux par l'intermédiaire d'un arbre synchrone (58) par l'intermédiaire de moyens de raccordement (61), sachant que les moyens de raccordement (61) ont des axes centraux de raccordement (63) s'étendant de manière parallèle et à distance les uns par rapport aux autres, présentant une distance identique par rapport à l'axe central longitudinal d'arbre synchrone (62), servant au décalage en sens opposé, sur une distance présentant une valeur égale des parties formant levier (51).

10. Ensemble selon la revendication 8 ou 9, **caractérisé en ce que** les organes de couplage (57) peuvent être pivotés par l'actionneur de réglage (66) au moins au nombre de un.

11. Ensemble selon l'une quelconque des revendications 8 à 10, **caractérisé en ce que** chaque partie formant levier (51) comprend, entre le corps d'articulation (49) et la partie de couplage (60), un moyen de palier de pivotement (64) aux fins de son agencement par pivotement.

12. Ensemble selon l'une quelconque des revendications précédentes, **caractérisé en ce que** le cylindre de tension de bande et de régulation de défilement de bande (43) peut être basculé autour d'un point de basculement (K), sachant que le point de basculement (K) se trouve essentiellement sur une charge linéaire (LL) en résultant de la bande de pressage (44).

13. Ensemble selon l'une quelconque des revendications précédentes, **caractérisé en ce qu'**un décalage local inversé de l'autre face du cylindre de tension de bande et de régulation de défilement de bande (43) sur une distance présentant une valeur donnée est effectué aux fins du basculement du cylindre de tension de bande et de régulation de défilement de bande (43) par rapport au cylindre de renvoi (42) lors d'un décalage local du cylindre de tension de bande et de régulation de défilement de bande (43) sur une distance d'une valeur égale au niveau d'une première face.

14. Ensemble selon l'une quelconque des revendications précédentes, **caractérisé en ce que** la modification homogène de la distance entre le cylindre de tension de bande et de régulation de défilement de bande (43) et le cylindre de renvoi (42) est effectuée de manière à présenter une forme d'arc, de préférence une forme d'arc de cercle.

15. Ensemble selon l'une quelconque des revendications précédentes, **caractérisé en ce qu'**un basculement du cylindre de tension de bande et de régulation de défilement de bande (43) est effectué par rapport à l'axe central longitudinal de cylindre de renvoi (41) aux fins de l'ajustement du profil de la bande de pressage (44) de telle manière que les longueurs de défilement (L1, L2, L3) de la bande de pressage (44) restent essentiellement identiques sur la largeur de cette dernière.
